# EUROPÄISCHE PATENTSCHRIFT

(11) **EP 3 607 545 B1**
(45) Veröffentlichungstag und Bekanntmachung des Hinweises auf die Patenterteilung: **28.07.2021**
(21) Anmeldenummer: 18711521.7
(22) Anmeldetag: 13.03.2018
(51) Int. Cl.: G10K 11/178

(54) **REGELUNGSVORRICHTUNG UND -VERFAHREN ZUR LÄRMMINDERUNG VON NEBENAGGREGATEN FÜR EIN FAHRZEUG**
CONTROL DEVICE AND METHOD FOR NOISE REDUCTION OF AUXILIARY ASSEMBLIES FOR A VEHICLE
DISPOSITIF ET PROCÉDÉ DE RÉGULATION POUR RÉDUIRE LE BRUIT DE GROUPES AUXILIAIRES D'UN VÉHICULE

(30) Priorität: 07.04.2017 DE 102017107538
(43) Veröffentlichungstag der Anmeldung: 12.02.2020
(73) Patentinhaber: Ipetronik GmbH & Co. KG, 76532 Baden-Baden (DE)
(72) Erfinder: HARTMANN, Thomas, 76571 Gaggeneu (DE); ZIPP, Walter, 67227 Frankenthal (DE)
(74) Vertreter: Pfrang, Tilman
(86) Internationale Anmeldenummer: PCT/EP2018/056161
(87) Internationale Veröffentlichungsnummer: WO 2018/184794

(56) Entgegenhaltungen:
- DE-A1- 19 531 402
- DE-A1-102010 008 899
- DE-A1-102014 218 791
- DE-A1-102015 119 555
- KR-A- 20160 149 548
- US-A1- 2016 205 472

## Beschreibung

Die Erfindung betrifft eine Regelungsvorrichtung zur Lärmminderung für ein Fahrzeug nach Anspruch 1, ein Fahrzeug mit einer solchen Regelungsvorrichtung nach Anspruch 11, insbesondere ein Elektrofahrzeug oder Hybridfahrzeug, sowie ein Regelungsverfahren zur Lärmminderung für ein Fahrzeug nach Anspruch 12.

Fahrzeuge erzeugen im Fahrbetrieb mechanische Schwingungen in Form von Vibrationen, die sich als Körperschall durch das Fahrzeug ausbreiten können und in Form von akustischen Schwingungen als Schall abgestrahlt werden. Diese Vibrationen und Schall in Form von Geräuschen oder Lärm können von Menschen wahrgenommen werden. Das vibroakustische Verhalten des Fahrzeugs ist entscheidend dafür, ob die emittierten Schwingungen von Fahrzeuginsassen oder Personen im Umfeld des Fahrzeugs als störend wahrgenommen werden oder sogar gesundheitsgefährdend sein können.

Bei ausschließlich von einem Verbrennungsmotor angetriebenen Fahrzeugen sind die vom Antriebsstrang erzeugten Schwingungen typischerweise dominant. Bei Elektro- oder Hybridfahrzeugen weist der Antriebsstrang einen Elektromotor als Hauptaggregat auf und die vom Antriebsstrang erzeugten Geräusche sind typischerweise leiser.

Auch im Stillstand eines Fahrzeugs, insbesondere sogar bei ausgeschaltetem Antrieb, können Fahrzeuge mechanische Schwingungen erzeugen, die beispielsweise von Nebenaggregaten des Fahrzeugs verursacht werden. Solche Nebenaggregate sind beispielsweise eine Klimaanlage mit einem Klimakompressor oder eine Lenkhilfe mit einer hydraulischen Servopumpe.

Insbesondere die Klimaanlage, sowohl im Betrieb als Kälteanlage zum Kühlen als auch im Betrieb als Wärmepumpe zum Heizen des Fahrzeuginnenraums, insbesondere auch im Betrieb als Standheizung oder Standkühlung, kann ein unerwünschtes vibroakustisches Verhalten des Fahrzeugs hervorrufen. Durch die Kühlung des elektrischen Akkumulators eines Elektro- oder Hybridfahrzeugs, insbesondere während eines Schnellladevorgangs, können ebenfalls unerwünschte Schwingungen auftreten. Anregungen vibroakustischer Effekte entstehen typischerweise durch elektrisch betriebene Klimakompressoren, insbesondere Scrollverdichter, sowie durch weitere Komponenten der Klimaanlage.

Aus dem Stand der Technik ist es bekannt, bei Elektro- oder Hybridfahrzeugen im niedrigen Geschwindigkeitsbereich, also insbesondere im rein elektrischen Betrieb, zusätzliche Außengeräusche zur Warnung anderer Verkehrsteilnehmer zu erzeugen.

Außerdem sind für konventionelle Fahrzeugen mit Verbrennungsmotor grundsätzlich technische Maßnahmen bekannt, die darauf abzielen, durch den Antriebsstrang angeregte Geräusche zu verhindern, abzuschwächen oder zu kompensieren.

Bei Elektrofahrzeugen und Hybridfahrzeugen im rein elektrischen Betrieb fallen allerdings durch Nebenaggregate, insbesondere durch eine Klimaanlage, erzeugte vibroakustische Geräusche besonders auf, da typische Verbrennungs- und Auspuffgeräusche konventioneller Fahrzeuge als Verdeckungsgeräusche entfallen.

Das Dokument DE 10201008899 A1 offenbart eine Regelungsvorrichtung zur Überdeckung vom Betriebsgeräusch eines elektrischen Kältemittelverdichters in einem Elektrofahrzeug oder Hybridfahrzeug.

Die vorliegende Erfindung hat deshalb die Aufgabe das vibroakustische Verhalten von Fahrzeugen, insbesondere von Elektrofahrzeugen oder Hybridfahrzeugen, zu verbessern. Insbesondere sollen die von einem Fahrzeug emittierten Geräusche von Insassen des Fahrzeugs und/oder Personen im Umfeld des Fahrzeugs als weniger störend wahrgenommen werden.

Diese Aufgabe wird jeweils durch eine Regelungsvorrichtung nach Anspruch 1, ein Fahrzeug nach Anspruch 11 sowie ein Regelungsverfahren nach Anspruch 12 gelöst.

Insbesondere wird die Aufgabe gelöst durch eine Regelungsvorrichtung zur Lärmminderung für ein Fahrzeug, insbesondere Elektrofahrzeug oder Hybridfahrzeug, umfassend:
- mindestens ein gelagertes Nebenaggregat für das Fahrzeug, beispielsweise eine Klimaanlage mit einem Klimakompressor, einen elektrischen Akkumulator oder einen Reichweitenverlängerer,
   wobei das Nebenaggregat im Betrieb Schwingungen emittiert;
- mindestens einen Schwingungssensor zur Erfassung von Schwingungen, insbesondere von Schall und/oder Vibrationen;
- mindestens einen regelbaren Schwingungsaktor zur Erzeugung von Schwingungen, insbesondere von Schall und/oder Vibrationen, und/oder mindestens einen regelbaren semi-aktiven Schwingungsdämpfer der Lagerung des Nebenaggregats; und
- eine Regelungseinheit, die mit dem Schwingungssensor und dem Schwingungsaktor bzw. dem Schwingungsdämpfer verbunden ist,
wobei die Regelungseinheit dazu ausgebildet ist, zumindest basierend auf den erfassten Schwingungen, Regelungssignale zur Übertragung an den Schwingungsaktor bzw. den Schwingungsdämpfer zu erzeugen, die bewirken, dass die von dem Nebenaggregat emittierten Schwingungen in einem Fahrzeuginnenraum und/oder in einer Fahrzeugumgebung abgemindert und/oder maskiert werden.

Erfindungsgemäß kann unter einem Nebenaggregat jede Hilfsmaschine eines Fahrzeugs, insbesondere Automobils, verstanden werden, aber nicht das Hauptaggregat, also der Hauptantriebsmotor zur Fortbewegung des Fahrzeugs ist. Beispielsweise sind Nebenaggregate eines Fahrzeugs eine Klimaanlage mit einem Klimakompressor, eine Lenkhilfe, insbesondere mit einer hydraulischen Servopumpe, sowie verschiedene Pumpen oder Lüfter. Bei Elektro- oder Hybridfahrzeugen ist ein Nebenaggregat beispielsweise ein elektrischer, bzw. elektrochemischer, Akkumulator oder ein Reichweitenverlängerer (auch als "Range Extender" bezeichnet), insbesondere mit einem Verbrennungsmotor, vorzugsweise mit einem angeschlossenen Generator. Insbesondere kann unter einem elektrischen Akkumulator ein Akkumulator verstanden werden, der zur Energieversorgung des Triebstrangs und/oder anderer Nebenaggregate eines Elektro- oder Hybridfahrzeugs dient.

Als Schwingungssensoren sind insbesondere Mikrofone zur Erfassung von Schall und/oder Beschleunigungssensoren zur Erfassung von Vibrationen, insbesondere körperschallsensitive Sensoren, vorgesehen. Unter einem Schwingungsaktor können erfindungsgemäß Lautsprecher und/oder aktive Schwingungsdämpfer oder aktive Schwingungstilger verstanden werden, insbesondere solche, die auf elektrodynamischen oder gasdynamischen Dämpfungsprinzipien beruhen. Ein regelbarer Schwingungsaktor kann Schwingungen einer, insbesondere variabel, einstellbaren Amplitude, Frequenz und/oder Phase erzeugen. Von einem Schwingungsaktor erzeugte Schwingungen können für eine Überlagerung mit von dem Nebenaggregat erzeugten Schwingungen genutzt werden, insbesondere zur destruktiven Interferenz in einem Schallfeld, auch als Antischall oder aktive Lärmkompensation bezeichnet, zur Dämpfung oder Tilgung mechanischer Schwingungen, um deren Ausbreitung zu verhindern oder zu begrenzen, oder zur Verdeckung bzw. Maskierung von Geräuschen für das menschliche Gehör. Eine Lagerung des Nebenaggregats kann einen semi-aktiven Schwingungsdämpfer aufweisen, der insbesondere insofern regelbar ist, als die Federsteifigkeits- und/oder Dämpfungscharakteristik der Lagerung, insbesondere variabel, einstellbar ist, wobei Schwingungen dem eingestellten Dämpfungsverhalten entsprechend passiv gedämpft werden. Dadurch kann zumindest teilweise eine Entkopplung des gelagerten Nebenaggregats erreicht werden, so dass insbesondere eine Einleitung von emittierten Schwingungen in die Fahrzeugkarosserie verhindert oder abgemindert wird.

Erfindungsgemäß soll einerseits die Ausbreitung der von einem Nebenaggregat erzeugten mechanischen Schwingungen durch eine Regelung zur semi-aktiven Schwigungsdämpfung, insbesondere mittels semi-aktiver bzw. intelligenter Lager, verhindert oder abgemindert werden. Andererseits soll die Wahrnehmbarkeit der durch vibroakustische Effekte entstehenden Geräusche durch eine Regelung zur aktiven Geräuschkompensation, insbesondere lokal, oder -Geräuschmaskierung mittels Schwingungsaktoren reduziert werden. Dabei ist wahlweise oder gleichzeitig eine Verringerung von störenden Geräuschen eines Nebenaggregats für Insassen im Innenraum eines Fahrzeugs und/oder für Personen in der Umgebung eines Fahrzeugs erzielbar. Die Regelung ist insbesondere dazu ausgebildet, die Abminderung oder Markierung für den Fahrzeuginnenraum oder die Fahrzeugumgebung basierend auf erfassten oder übermittelten Daten zu priorisieren und/oder vorgegebene Grenzwerte zur Lärmemission oder Lärmimmission einhalten.

Das vibroakustische Verhalten wird aufgrund der erfindungsgemäßen Regelungsvorrichtung verbessert. Insbesondere werden ungewohnte oder störende Geräusche eines Nebenaggregats eines Fahrzeugs in ihrer Wirkung abgemindert. Insbesondere wird ein Elektrofahrzeug oder ein Hybridfahrzeug im rein elektrischen Betrieb dadurch leiser, besonders im Stillstand des Fahrzeugs bei gleichzeitig betriebenem Nebenaggregat.

In einer vorteilhaften Weiterbildung der Erfindung ist ein Schwingungssensor ein Innenmikrofon zur Erfassung von Schall in einem Fahrzeuginnenraum, das insbesondere an einer Kopfstütze eines Fahrzeugsitzes angeordnet ist, oder ein Außenmikrofon zur Erfassung von Umgebungsgeräuschen. Insbesondere ist ein Innenmikrofon in die Kopfstütze integriert, wobei für jede Kopfstütze ein separates Innenmikrofon vorgesehen sein kann. Dadurch kann Schall in der Nähe des Gehörs von Insassen erfasst werden und Schwingungsaktoren, insbesondere Lautsprecher oder aktive Schwingungsdämpfer im Fahrzeuginnenraum, wie z.B. Shaker, können so geregelt werden, dass eine aktive Geräuschkompensation erzielt wird. Beispielsweise könnte auch die Sitzposition eines Fahrzeugsitzes sensorisch erfasst werden und in die Regelung einfließen, um ein gezielteres Regelungsergebnis zu erreichen. Beispielsweise könnte die Sitzposition durch durch Positionssensoren, insbesondere Winkelsensoren, die in einem Fahrzeugsitz vorgesehen sind, sensorisch erfasst werden. Ein Innenmikrofon kann aber auch das Mikrofon einer Freisprechanlage sein. Ein Außenmikrofon kann beispielsweise zur Anbringung unterhalb der Motorhaube oder an der Außenseite eines Fahrzeugs vorgesehen sein und insbesondere Verkehrslärm, Baulärm, Windgeräusche, Regengeräusche oder Geräusche von Passanten erfassen.

In einer vorteilhaften Weiterbildung der Erfindung umfasst die Regelungsvorrichtung mindestens eine Kamera, insbesondere zur Erfassung der Position eines Fahrzeugsitzes und/oder der Kopfposition eines Insassen des Fahrzeugs und/oder zur Erfassung der Müdigkeit eines Insassen des Fahrzeugs. Vorzugsweise ist mindestens eine Kamera, insbesondere Stereokamera, im Fahrzeuginnenraum angeordnet, vorzugsweise im Bereich einer Sonnenblende, und auf den Fahrzeugsitz bzw. den Kopf eines Insassen gerichtet. Mit einer Kamera könnte über geeignete Bilderkennungsverfahren, insbesondere zur Gesichts- bzw. Augenerkennung, die Müdigkeit eines Insassen erfasst werden indem erfasst wird, ob die Augen eines Insassen offen oder geschlossen sind. Eine aktive Geräuschkompensation im Fahrzeuginnenraum könnte dann für einen ruhenden Fahrzeuginsassen optimiert werden. Insbesondere Brummtöne können an verschiedenen Sitzpositionen sehr unterschiedlich ausgeprägt sein und z.B. um 6-8 bB auf 40 cm Positionsänderung in Fahrzeugquerrichtung variieren. Insbesondere bei einem Fahrzeugsitz, dessen Rückenlehne in eine Liegeposition zurückgeklappt ist, ergibt sich eine veränderte Position des Kopfes des Fahrzeuginsassen. Eine Kamera hat den Vorteil, dass mithilfe eines Bilderkennungsverfahrens die Position des Sitzes, insbesondere der Kopfstütze, bzw. des Kopfes des Fahrers, insbesondere seiner Ohren, genau erfassbar ist und ein Zielbereich für die Optimierung einer aktiven Geräuschkompensation, insbesondere durch destruktive Interferenz, durch geeignete Bilderkennungsverfahren identifiziert werden kann. Dadurch kann das Regelungsergebnis im Hinblick auf eine aktive Geräuschkompensation im Fahrzeuginnenraum weiter verbessert werden, insbesondere für einen ruhenden Fahrzeuginsassen.

In einer vorteilhaften Weiterbildung der Erfindung ist ein Schwingungsaktor ein auf einen Fahrzeuginnenraum gerichteter Innenlautsprecher oder ein auf eine Fahrzeugumgebung gerichteter Außenlautsprecher, insbesondere zur Emission von Antischall und/oder Maskierungsschall. Durch die Ansteuerung von Lautsprechern mit auf die von Mikrofonen erfassten Schallsignale abgestimmten Regelsignalen durch die Regeleinheit kann eine destruktive Interferenz im Schallfeld, insbesondere lokal im Umfeld eines Mikrofons, erzielt werden. Als Innenlautsprecher kann auch ein HiFi-Innenlautsprecher eines fahrzeuginternen Audio-Unterhaltungssystems genutzt werden. Ein Außenlautsprecher kann beispielsweise zur Anbringung unterhalb der Motorhaube oder an der Außenseite eines Fahrzeugs vorgesehen sein. Über einen Außenlautsprecher können Geräusche zur Verdeckung von störenden Geräuschen des Nebenaggregats in die Umgebung eines Fahrzeugs eingespielt werden.

In einer vorteilhaften Weiterbildung der Erfindung umfasst das Nebenaggregat einen Klimakompressor, insbesondere einen Scrollverdichter, oder einen Reichweitenverlängerer, der einen Drehzahlsensor aufweist, wobei die Regelungseinheit dazu ausgebildet ist, Regelungssignale basierend auf einer durch den Drehzahlsensor erfassten Drehzahl des Klimakompressors bzw. des Reichweitenverlängerers zu erzeugen, insbesondere um die Federsteifigkeit und/oder Dämpfung des semi-aktiven Schwingungsdämpfers, vorzugsweise variabel, einzustellen. Eine Klimaanlage umfasst beispielsweise einen Klimakompressor, beispielsweise in Form eines Scrollverdichters oder eines Taumelscheibenverdichters, der in Abhängigkeit seiner Drehzahl und/oder Last mechanische Schwingungen erzeugen und dadurch vibroakustische Effekte in einem Fahrzeug verursachen kann. Auch bei einem Reichweitenverlängerer mit einem Verbrennungsmotor als Nebenaggregat, insbesondere mit einem über eine rotierende Welle angeschlossenen Generator, können drehzahlabhängig Schwingungen auftreten. Indem die Drehzahl eines solchen Nebenaggregats sensorisch erfasst wird, kann sie als Parameter in die Regelung einfließen. Insbesondere ist in der Regeleinheit ein drehzahlabhängiges Modell, beispielsweise in tabellarischer Form, des vibroakustischen Verhaltens des Nebenaggregats, insbesondere der Klimaanlage mit dem Klimakompressor und anderen Komponenten, wie zum Beispiel dem Kondensator, dem Verdampfer oder Kältemittelleitungen, bzw. des Reichweitenverlängerers mit dem Verbrennungsmotor, und/oder einer drehzahlabhängigen Kennlinie des Lagers des Nebenaggregats, insbesondere im Hinblick auf seine Feder- und/oder Dämpfungseigenschaften, hinterlegt. Auf diese Weise kann die Regelung die Lagercharakteristik in Abhängigkeit von der erfassten Drehzahl, insbesondere variabel über die Zeit, einstellen, um die gewünschten passiven Dämpfungseigenschaften des Lagers zu erzielen. Über insbesondere im Umfeld des Nebenaggregats angeordnete Schwingungssensoren, beispielsweise Mikrofone oder körperschallsensitive Sensoren, insbesondere Beschleunigungssensoren, sind von dem Nebenaggregat erzeugte Schwingungen möglichst wirkungsvoll, nämlich bereits in der Nähe der Schallquelle, erfassbar. Mit einer solchen Regelungsvorrichtung kann zumindest teilweise eine Entkopplung des Nebenaggregats von einer Fahrzeugkarosserie erreicht werden, so dass die Einleitung von Körperschall verhindert oder abgemindert wird. Auf diese Weise wird das vibroakustische Verhalten des Fahrzeugs bei betriebenen Nebenaggregat, insbesondere bei einem stillstehenden Fahrzeug, sogar bei ausgeschaltetem Hauptaggregat, weiter verbessert.

In einer vorteilhaften Weiterbildung der Erfindung umfasst der semi-aktive Schwingungsdämpfer ein magnetorheologisches oder eine elektrorheologisches Material, insbesondere eine Flüssigkeit, ein Gel, ein Elastomer oder einen Schaum. Die Federsteifigkeits- und Dämpfungscharakteristik von Lagern, die auf magnetorheologischen oder elektrorheologischen Materialien, insbesondere Flüssigkeiten (MRF, ERF) oder Elastomeren (MRE, ERE), beruhen sind steuerbar, insbesondere drehzahlabhängig regelbar, um eine Entkopplung des gelagerten Nebenaggregats zur Vermeidung vibroakustischer Effekte zu erzielen. Auch der Einsatz von piezokeramischen Materialien in semi-aktiven Lagern für Nebenaggregate ist denkbar.

In einer vorteilhaften Weiterbildung der Erfindung ist ein Schwingungsaktor ein aktiver Pulsationsdämpfer, der insbesondere in einer Kühlmittelleitung einer Klimaanlage angeordnet ist. Aktive Pulsationsdämpfer umfassen insbesondere ein mittels einer Membran abgetrenntes aktiv steuerbares Gasvolumen, um strömungsdynamische Schwingungen zu dämpfen. Aktive Pulsationsdämpfer sind insbesondere in der Saug- und/oder Heißgasleitung der Klimaanlage, insbesondere in einer Zu- und/oder Ablaufleitung des Klimakompressors angeordnet.

In einer vorteilhaften Weiterbildung der Erfindung ist der Schwingungsaktor ein ein- oder mehrachsiger Shaker, insbesondere zur Anordnung an einem Dach, einem Bodenblech oder einer Lenksäule des Fahrzeugs. Insbesondere sind aktive elektrodynamische Schwingungsdämpfer, wie Shaker, zur Anbringung an mindestens einer Stelle der Fahrzeugkarosserie vorgesehen, um mechanische Schwingungen zu dämpfen oder zu tilgen.

In einer vorteilhaften Weiterbildung der Erfindung ist ein Schwingungssensor ein Beschleunigungssensor zur Erfassung von Vibrationen, insbesondere zur Anordnung an einer Fahrzeugkarosserie. Vorzugsweise ist mindestens ein körperschallsensitiver Beschleunigungssensor dem Fahrzeuginnenraum zugeordnet. Weitere Beschleunigungssensoren können im Bereich von Nebenaggregaten, z.B. im Bereich einer Klimaanlage im Vorderbereich eines Fahrzeugs oder im Bereich eines Reichweitenverlängerers im Heckbereich eines Fahrzeugs, vorgesehen sein. Durch Beschleunigungssensoren können an entsprechenden Positionen erfasste Körperschallsignale in die Regelung einfließen.

In einer vorteilhaften Weiterbildung der Erfindung weist die Regelungsvorrichtung eine Sende-/Empfangseinheit auf, die dazu ausgebildet ist, Lärmemissions- und/oder Lärmimmissionsgrenzwertdaten zu empfangen, wobei die Regelungsvorrichtung vorzugsweise einen GPS-Empfänger aufweist und die Sende-/Empfangseinheit vorzugsweise dazu ausgebildet ist, Lärmemissions- und/oder Lärmimmissionsgrenzwertdaten basierend auf einer von dem GPS-Empfänger empfangenen Position und/oder Zeit zu empfangen. Lärmemissions- und/oder Lärmimmissionsgrenzwerte, insbesondere gesetzlich vorgeschriebene Grenzwerte, können beispielsweise durch eine externe Datenbank, z.B. einer Umweltbehörde, oder eine Ladestation für ein Elektrofahrzeug über z.B. über eine Funkverbindung an die Regelungsvorrichtung übermittelt werden oder auf Anfrage die Regelungsvorrichtung auf Grundlage einer erfassten Fahrzeugposition und/oder eines Zeitpunkts, insbesondere der Uhrzeit und/oder des Datums, örtlich und/oder zeitlich spezifisch an die Regelungsvorrichtung übermittelt werden. Lärmemissions- und/oder Lärmimmissionsgrenzwertdaten können sich zum Beispiel auf ein z.B. Wohngebiet, Kurgebiet oder ein Industriegebiet beziehen, in dem sich ein Fahrzeug gerade befindet, oder auf einen Werktag, einen Feiertag, eine Nachtzeit, eine Geschäftszeit, während der ein Fahrzeug gerade unterwegs ist. Auf diese Weise kann die Regelung so ausgeführt werden, dass Grenzwerte für die Lärmemission des Fahrzeugs oder Lärmimmission für Insassen und/oder Personen im Fahrzeugumfeld eingehalten werden.

Insbesondere umfasst die Regelungsvorrichtung einen computerlesbaren fahrzeuginternen Datenspeicher mit Umgebungsgeräuschdaten des Fahrzeugs und/oder Lärmemissions- und/oder Lärmimmissionsgrenzwertdaten, die sich insbesondere auf eine Fahrzeugumgebung beziehen.

Die Aufgabe wird weiterhin insbesondere gelöst durch ein Fahrzeug, insbesondere Elektrofahrzeug oder Hybridfahrzeug, das eine erfindungsgemäße zuvor beschriebene eine Regelungsvorrichtung aufweist.

Die Aufgabe wird weiterhin insbesondere gelöst durch ein Regelungsverfahren zur Lärmminderung für ein Fahrzeug, das insbesondere mittels einer erfindungsgemäßen Vorrichtung durchgeführt wird, wobei das Regelungsverfahren die folgenden Schritte umfasst:
- Erfassen von Schwingungen, insbesondere von Schall und/oder Vibrationen, die von einem Nebenaggregat des Fahrzeugs emittiert werden, mittels mindestens eines Schwingungssensors;
- Erzeugen von Reglungssignalen mittels einer Regelungseinheit zumindest basierend auf den erfassten Schwingungen;
- Übertragen der Reglungssignale an mindestens einen regelbaren Schwingungsaktor und/oder mindestens einen regelbaren semi-aktiven Schwingungsdämpfer der Lagerung des Nebenaggregats;
- Erzeugen von Schwingungen, insbesondere von Schall und/oder Vibrationen, mittels des Schwingungsaktors und/oder Dämpfen vom Schwingungen mittels des Schwingungsdämpfers, basierend auf den übertragenen Regelungssignalen, um zu bewirken, dass die von dem Nebenaggregat emittierten Schwingungen in einem Fahrzeuginnenraum und/oder in einer Fahrzeugumgebung abgemindert und/oder maskiert werden.

Das Verfahren hat ähnliche Vorteile, wie sie bereits in Verbindung mit der erfindungsgemäßen Regelungsvorrichtung beschrieben wurden. Das Verfahren kann von der erfindungsgemäßen Regelungsvorrichtung implementiert werden, insbesondere durch eine solche Regelungsvorrichtung in einem Fahrzeug. Das Verfahren kann weiterhin einige oder alle verfahrenstechnischen Merkmale umsetzen, die im Zusammenhang mit der Regelungsvorrichtung beschrieben sind.

In einer vorteilhaften Weiterbildung der Erfindung wird das Regelungsverfahren bei Stillstand eines Fahrzeugs, insbesondere Elektrofahrzeugs oder Hybridfahrzeugs, bei Betrieb des Nebenaggregats durchgeführt, vorzugsweise bei Betrieb einer Klimaanlage oder Standheizung und/oder beim Aufladen des elektrischen Akkumulators des Fahrzeugs, insbesondere während eines Schnellladevorgangs des elektrischen Akkumulators. Die bei Stillstand des Fahrzeugs von betriebenen Nebenaggregaten emittierten Schwingungen können durch das erfindungsgemäße Regelungsverfahren abgemindert und/oder maskiert werden, während die Geräusche des Hauptaggregats, insbesondere eines Verbrennungsmotors oder eines Elektromotors, bei stillstehenden Fahrzeug leiser sind als im Fahrbetrieb oder ganz wegfallen. Insbesondere wird das Regelungsverfahren durchgeführt während sich das Hauptaggregat im Leerlauf befindet oder aufgrund einer Start-Stopp-Automatik vorübergehend ausgeschaltet ist, z.B. bei stillstehenden Fahrzeug vor einer roten Ampel oder in einem Verkehrsstau. Das Verfahren wird aber vorzugsweise auch bei komplett ausgeschaltetem Hauptaggregat, z.B. während eines Ladevorgangs des elektrischen Akkumulators eines Elektro- oder Hybridfahrzeugs, durchgeführt. Auf diese Weise können Geräusche von Nebenaggregaten, die während des Fahrbetriebs unter Umständen nicht stören bzw. auffallen würden, abgemindert und/oder maskiert werden.

In einer vorteilhaften Weiterbildung der Erfindung umfasst das Regelungsverfahren das Erfassen der, insbesondere variablen, Drehzahl eines von einem Nebenaggregat umfassten Klimakompressors, insbesondere eines Scrollverdichters einer Klimaanlage, oder Reichweitenverlängerers und das Erzeugen von Regelungssignalen basierend auf der erfassten Drehzahl, insbesondere zum Einstellen, vorzugsweise variabel, der Federsteifigkeit und/oder Dämpfung des semi-aktiven Schwingungsdämpfers der Lagerung des Nebenaggregats.

In einer vorteilhaften Weiterbildung der Erfindung umfasst das Regelungsverfahren das Erfassen eines Umgebungsgeräuschs des Fahrzeugs mittels eines Außenmikrophons und insbesondere das Abspeichern der erfassten Umgebungsgeräuschdaten in einem computerlesbaren fahrzeuginternen Datenspeicher, vorzugsweise in Form von aufgezeichneten Referenzschallsignalen.

In einer vorteilhaften Weiterbildung der Erfindung umfasst das Regelungsverfahren das Empfangen von Lärmemissions- und/oder Lärmimmissionsgrenzwertdaten, beispielsweise von einer Ladestation für ein Elektrofahrzeug oder Hybridfahrzeug oder basierend auf empfangenen GPS-Daten, wobei sich die Lärmemissions- und/oder Lärmimmissionsgrenzwertdaten insbesondere auf eine Fahrzeugumgebung beziehen.

In einer vorteilhaften Weiterbildung der Erfindung umfasst das Regelungsverfahren das Einstellen, insbesondere variabel, der Ladeleistung des elektrischen Akkumulators des Fahrzeugs während des Aufladevorgangs, insbesondere basierend auf der zur Kühlung des elektrischen Akkumulators während des Aufladevorgangs erforderlichen Kühlleistung einer Klimaanlage, derart, dass Lärmemissions- und/oder Lärmimmissionsgrenzwerte eingehalten werden. Insbesondere umfasst das Regelungsverfahren das Einstellen, insbesondere variabel, der Drehzahl und/oder der Last eines Klimakompressors einer Klimaanlage derart, dass Lärmemissions- und/oder Lärmimmissionsgrenzwerte eingehalten werden.

In einer vorteilhaften Weiterbildung der Erfindung umfasst das Regelungsverfahren Emittieren von Schall in die Fahrzeugumgebung mittels mindestens eines Außenlautsprechers zur Maskierung des von einem Nebenaggregat emittierten Schalls, insbesondere basierend auf ausgelesenen Umgebungsgeräuschdaten, insbesondere aufgezeichneten Referenzschallsignalen, vorzugsweise in zeitlich unregelmäßigen Abständen. Während eines Maskierungsintervalls kann insbesondere die Drehzahl eines Nebenaggregats, insbesondere eines Klimakompressors, erhöht werden, wobei die Nebenaggregatsgeräusche von dem Maskierungsschall verdeckt werden bzw. davon abgelenkt wird. Der emittierte Schall kann beispielsweise Töne, Rauschen, Musik, Umgebungsgeräusche wie Verkehrslärm, Baulärm, Windgeräusche, Geräusche vorbeifahrender Fahrzeuge oder vorbeigehender Passanten oder Vogelgezwitscher umfassen.

In einer vorteilhaften Weiterbildung der Erfindung umfasst das Regelungsverfahren das Priorisieren des Erzeugens von Reglungssignalen die sich im Wesentlichen entweder auf einen Fahrzeuginnenraum oder eine Fahrzeugumgebung auswirken, insbesondere basierend auf einer sensorisch erfassten Sitzbelegung des Fahrzeugs und/oder erfasster Umgebungsdaten des Fahrzeugs. Es kann auch die Fahrzeugposition und/oder ein momentaner Zeitpunkt berücksichtigt werden. Beispielsweise kann auf einen Regelungsschritt, der auf eine Geräuschminderung im Fahrzeuginnenraum abzielt, verzichtet werden, wenn sich keine Insassen im Fahrzeug befinden. Unter Umständen kann eine Regelung, die auf die Geräuschminderung und/oder -maskierung in der Fahrzeugumgebung abzielt, dann sogar wirkungsvoller bzw. ressourcensparender durchgeführt werden.

Außerdem kann gemäß einem Aspekt der Erfindung das Regelungsverfahren das Erfassen von Schwingungen einer Kühlanlage einer Ladestation für einen elektrischen Akkumulator und die Berücksichtigung der erfassten Schwingungen in dem Regelungsverfahren umfassen, insbesondere wenn ein Nebenaggregat des Fahrzeugs während eines Ladevorgangs des elektrischen Akkumulators nicht in Betrieb ist. Auf diese Weise können insbesondere von der Ladestation emittierte Geräusche durch die erfindungsgemäße Regelungsvorrichtung bzw. Regelungsverfahren in einer Umgebung des Fahrzeugs abgemindert und/oder maskiert werden.

Ausführungsbeispiele der Erfindung werden nachfolgend anhand der Zeichnungen näher beschrieben. Hierbei zeigen:
- Figur 1: eine schematische Darstellung einer Ausführungsform eines Fahrzeugs mit einer erfindungsgemäßen Regelungsvorrichtung;
- Figur 2: eine schematische Darstellung der Ausführungsform einer erfindungsgemäßen Regelungsvorrichtung nach Figur 1.

In der nachfolgenden Beschreibung der Erfindung werden für gleiche und gleich wirkende Elemente dieselben Bezugszeichen verwendet.

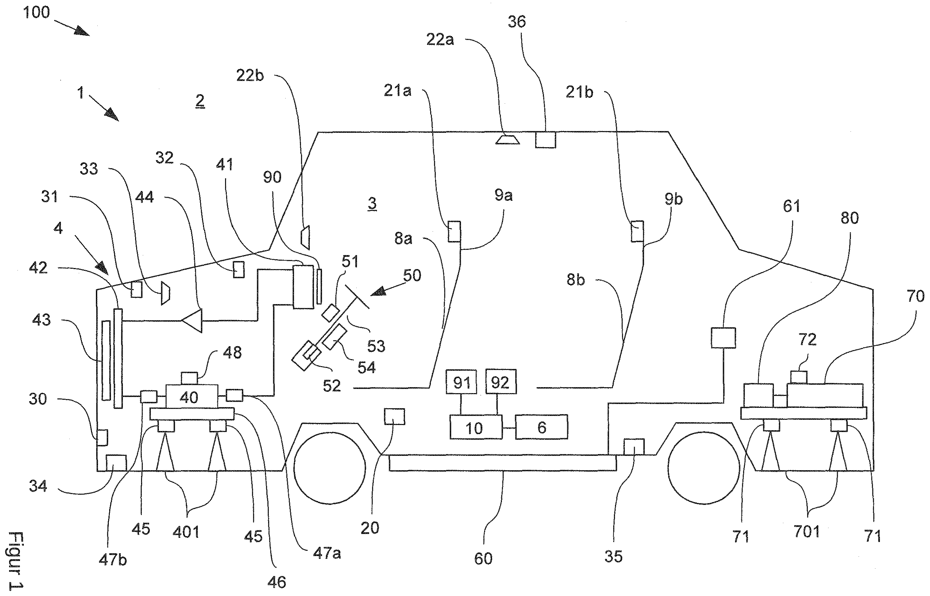

Figur 1 zeigt ein erfindungsgemäßes Fahrzeug 100, hier ein Elektro- bzw. Hybridfahrzeug, mit einer erfindungsgemäßen Regelungsvorrichtung 1, wobei das Fahrzeug 100 verschiedene Nebenaggregate, wie eine Klimaanlage 4, eine Lenkhilfe 50 und einen elektrischen Akkumulator 60 aufweist. Der elektrische Akkumulator 60 dient zur Energieversorgung des Triebstrangs und/oder anderer Nebenaggregate des Fahrzeugs 100. Zusätzlich ist optional ein Reichweitenverlängerer 70 (Range Extender) vorgesehen, der hier als ein Nebenaggregat mit einem Verbrennungsmotor ausgeführt ist, an den ein Generator 80 angekoppelt ist. Die Klimaanlage 4 umfasst einen Klimakompressor 40, insbesondere einen Scrollverdichter, einen Verdampfer 41, einen Kondensator einen 42, einen Lüfter 43, ein Expansionsventil 44 sowie verbindende Kühlmittelleitungen. Die Klimaanlage 4 kann zur Heizung oder Kühlung des Fahrzeuginnenraums 3 sowie zur Kühlung des elektrischen Akkumulators 60, insbesondere beim Aufladen, genutzt werden. Der Klimakompressor 40 ist über semi-aktive Schwingungsdämpfer 45 der Lagerung 401 auf einem Hilfsrahmen 46 gelagert, der z.B. ungefähr die doppelte Länge und Breite des Klimakompressors 40 hat. Ebenso sind der Reichweitenverlängerer 70 und der Generator 80 über semi-aktive Schwingungsdämpfer 71 der Lagerung 701 an der Fahrzeugkarosserie gelagert. Es könnte auch eine gemeinsame Lagerung mit weiteren Komponenten der Klimaanlage 4, z.B. des Verdampfers 41 und des Kondensators 42, oder jeweils einzelne Lagerungen dafür vorgesehen sein. Dies gilt ebenso für den Reichweitenverlängerer 70 und den Generator 80 sowie mögliche weitere Elemente der Aggregatsperipherie. Die im Bereich der Lenksäule 53 vorgesehene Lenkhilfe 50 umfasst eine Servopumpe 54. Nebenaggregate wie die Klimaanlage 4 mit dem Klimakompressor 40, die Lenkhilfe 50 mit der Servopumpe 54, der elektrische Akkumulator 60, der Reichweitenverlängerer 70 und der Generator 80 erzeugen im Betrieb Schwingungen, die vibroakustische Effekte verursachen können, die von Insassen des Fahrzeugs 100 im Fahrzeuginnenraum 3 oder von Personen in der Fahrzeugumgebung 2, also außerhalb des Fahrzeugs 100, als störend wahrgenommen werden können.

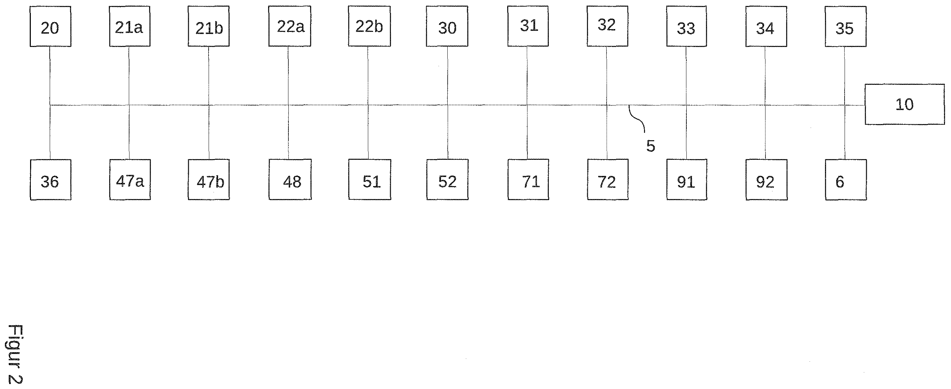

Erfindungsgemäß umfasst die in den Figuren 1 und 2 dargestellte Regelungsvorrichtung 1 außer den genannten Nebenaggregaten eine Regelungseinheit 10, die mindestens eine Recheneinheit, insbesondere eine CPU, aufweist, und Schwingungssensoren 21a, 21b, 32, 20, 30, 31, 52 sowie regelbare Schwingungsaktoren 22a, 22b, 33, 34, 35, 36, 51, 47a, 47b und die genannten regelbaren semi-aktiven Schwingungsdämpfer 45, 71, die allesamt über den Fahrzeugdatenbus 5 kommunikativ bzw. signalleitend miteinander verbunden sind (siehe Figur 2). Außerdem sind den Schwingungssensoren und den Schwingungsaktor zugeordnete Steuergeräte vorgesehen (nicht dargestellt). Außerdem umfasst die Regelungsvorrichtung 1 einen fahrzeuginternen Datenspeicher 6, eine Sende-/Empfangseinheit 91 und einen GPS-Empfänger 92, die alle über den Fahrzeugdatenbus 5 mit der Regelungseinheit 10 verbunden sind. Die Regelungseinheit 10 führt einen auf einem computerlesbaren Speicher hinterlegten Regelungsalgorithmus aus, dessen Eingangsparameter auf von Schwingungssensoren 21a, 21b, 32, 20, 30, 31, 52 erzeugten Sensorsignalen basieren und dessen Ausgangsparameter als Regelungssignale an Schwingungsaktoren 22a, 22b, 33, 34, 35, 36, 51, 47a, 47b und/oder semi-aktive Schwingungsdämpfer 45, 71 übertragen werden. Es können auch nur einzelne der genannten Schwingungssensoren, Schwingungsaktoren oder Schwingungsdämpfer sowie Untergruppen davon in der Regelungsvorrichtung 1 vorgesehen sein. Insbesondere sind Ausführungsformen der Erfindung umfasst, die nur einzelne der genannten Nebenaggregate, insbesondere nur die Klimaanlage 4, die Lenkhilfe 50, den elektrischen Akkumulator 60 oder den Reichweitenverlängerer 70 sowie beliebige Kombinationen davon aufweisen.

Gemäß einem Aspekt der Erfindung sind Schwingungssensoren als erste und zweite Innenmikrofone 21a bzw. 21b an der Kopfstütze 9a bzw. 9b des Fahrersitzes 8a bzw. 8b angeordnet, die Schall im Fahrzeuginnenraum 3 erfassen und entsprechende Sensorsignale an die Regelungseinheit 10 übertragen. Zusätzlich sind Schwingungsaktoren als Innenlautsprecher 22a und/oder HiFi-Innenlautsprecher 22b auf den Fahrzeuginnenraum ausgerichtet, die basierend auf von der Regelungseinheit erzeugten Regelungssignalen Schall in den Fahrzeuginnenraum abstrahlen, um innerhalb des Fahrzeuginnenraums ein Schalfeld mit, zumindest lokaler, destruktiver Interferenz zu erzeugen. Durch die Rückführung der von den Innenmikrofonen 21a und 21b erfassten Sensorsignale an die Regelungseinheit können die Innenlautsprecher 22a und/oder 22b so geregelt werden, dass gezielt im Bereich der Kopfstützen 9a und 9b Schall ausgelöscht oder zumindest abgemindert wird. Insbesondere kann über mehrere Innenlautsprecher eine gezielte Wellenfeldsynthese im Fahrzeuginnenraum 3 erzeugt werden. Über einen Innenlautsprecher 22a, 22b kann auch Maskierungsschall in den Fahrzeuginnenraum abgestrahlt werden, um die von einem Nebenaggregat emittierten Schwingungen zu verdecken.

Gemäß einem weiteren Aspekt der Erfindung ist ein Schwingungssensor als ein Außenmikrofon 32 und ein Schwingungsaktor als ein auf die Fahrzeugumgebung 2 gerichteter Außenlautsprecher 33 vorgesehen. Es können mehrere Außenmikrofone 32 und/oder Außenlautsprecher 33 an verschiedenen Stellen des Fahrzeugs bzw. verschiedener Ausrichtung vorgesehen sein. Über das Außenmikrofon 32 können beispielsweise Umgebungsgeräusche des Fahrzeugs 100 erfasst und, vorzugsweise nach einem Datenverarbeitungsschritt, in einem fahrzeuginternen Datenspeicher 6 abgespeichert werden. Ähnlich wie im Zusammenhang mit dem Fahrzeuginnenraum beschrieben, kann über den Außenlautsprecher 33 auch in der Fahrzeugumgebung destruktive Interferenz im Schallfeld erzeugt werden, insbesondere durch die Aussendung von Antischall. Alternativ oder zusätzlich können Geräusche von Nebenaggregaten maskiert werden, beispielsweise durch Abspielen von zuvor als Referenzschallsignale aufgezeichneten und in einem fahrzeuginternen Datenspeicher 6 abgespeicherten Umgebungsgeräuschen, wie beispielsweise Verkehrslärm, Baulärm, Windgeräuschen, Regengeräusche, Vogelgezwitscher oder andere Geräusche, die im Umfeld des Fahrzeugs auftreten.

Gemäß einem weiteren Aspekt der Erfindung sind Schwingungssensoren als ein dem Fahrzeuginnenraum zugeordneter körperschallsensitiver Beschleunigungssensor 20 und weitere Beschleunigungssensoren 30, 31 im vorderen Bereich des Fahrzeugs sowie ein der Lenksäule 53 zugeordneter Beschleunigungssensor 52 vorgesehen, um Vibrationen in Form von Körperschall zu Erfassen und entsprechende Sensorsignale an die Regelungseinheit 10 zu übertragen bzw. rückzuführen. Elektrodynamische Schwingungsaktoren in Form von ein- oder mehrachsigen Shakern, nämlich ein am Dach angebrachter Shaker 36, ein am Bodenblech angebrachter Shaker 35, ein im Vorderbereich des Fahrzeugs 100 angebrachter Shaker 34 und ein an der Lenksäule 53 angeordneter Shaker 51 erzeugen auf Grundlage von durch die Regelungseinheit 10 erzeugten Regelungssignalen aktiv mechanische Schwingungen zur Dämpfung oder Tilgung der von einem Nebenaggregat, beispielsweise durch den Klimakompressor 40 oder die Servopumpe 54, erzeugten Schwingungen. Auf diese Weise können unerwünschte spürbare Vibrationen und hörbare vibroakustische Effekte verhindert oder zumindest abgemindert werden.

Gemäß einem weiteren Aspekt der Erfindung sind der Klimakompressors 40 und/oder der Reichweitenverlängerer 70 mit einem Drehzahlsensor 48 bzw. 72 ausgestattet. Durch eine Erfassung der Drehzahl eines Nebenaggregats kann die Federsteifigkeit- und/oder Dämpfungscharakteristik der Lagerung dieses Nebenaggregats über semi-aktive Schwingungsdämpfer drehzahlabhängig so eingestellt oder geregelt werden, dass das Nebenaggregat möglichst gut von der Fahrzeugkarosserie entkoppelt wird, an der es gelagert ist, insbesondere für verschiedene Betriebszustände des Nebenaggregats. Die semi-aktiven Schwingungsdämpfer umfassen beispielsweise magnetorheologische oder elektrorheologische Materialien, deren Federsteifigkeits- und Dämpfungseigenschaften magnetisch bzw. elektrisch steuerbar sind. Alternativ oder zusätzlich sind in Kältemittelleitungen der Klimaanlage 4 aktive Pulsationsdämpfer 47a und 47b vorgesehen, die hier in der Zu- bzw. Ablaufleitung des Klimakompressors 40 angeordnet sind und strömungsdynamisch erzeugte Schwingungen basierend auf von der Regelungseinheit 10 übertragenen Regelungssignalen dämpfen können.

Über die Sende-/Empfangseinheit 91 kann die Regelungsvorrichtung 1 Lärmemissions- und/oder Lärmimmissionsgrenzwertdaten empfangen, die beispielsweise von der Regelungsvorrichtung 1 aufgrund eines von einem GPS-Empfänger 92 empfangenen Positions- und/oder Zeitsignal für das Fahrzeug 100 über eine Funkverbindung von einer externen Datenbank angefragt werden. Insbesondere können Lärmemissions- und/oder Lärmimmissionsgrenzwertdaten von einer Ladestation für den elektrischen Akkumulator 60 über die Sende-/Empfangseinheit 91 an die Regelungsvorrichtung 1 gesendet werden. Die in den Lärmemissions- und/oder Lärmimmissionsgrenzwertdaten enthaltenen Grenzwerte werden von der Regelungseinheit 10 bei der Regelung insofern berücksichtigt, als diese Schallgrenzwerte beispielsweise im Fahrzeuginnenraum 3 und/oder in der Fahrzeugumgebung 2 eingehalten werden. Vorzugsweise wird die Drehzahl und/oder Last des Klimakompressors 40 oder des Reichweitenverlängerers 70 basierend auf den vorgegebenen Lärmemissions- und/oder Lärmimmissionsgrenzwerten geregelt.

Das erfindungsgemäße Regelungsverfahren wird vorzugsweise bei Stillstand des Fahrzeugs 100, aber bei betriebenem Nebenaggregat, insbesondere bei betriebener Klimaanlage 4 durchgeführt. In Folgenden werden einige Beispiele für Anwendungsfälle des Regelungsverfahrens beschrieben.

Beispielsweise ist bei einem vollbesetzten Fahrzeug im Sommer beim Warten an einer roten Ampel der Kühlbedarf für den Fahrzeuginnenraum 3 hoch, so dass die Klimaanlage 4 den Klimakompressor 40 mit hoher Drehzahl betreibt. Um Vibrationen und Brummgeräusche im Fahrzeuginnenraum 3 abzumindern, wird die Federsteifigkeit und Dämpfung der Lagerung 401 über eine geeignete Ansteuerung der semi-aktiven Schwingungsdämpfer 45 durch die Regeleinheit 10 drehzahlabhängig eingestellt. Aufgrund der von den Innenmikrofonen 21a und 21b erfassten Geräusche können die Eigenschaften der Lagerung nachgeregelt werden, um die Auswirkungen der vibroakustischen Effekte weiter zu reduzieren.

Beispielsweise kann in einem Fahrzeug, das im Sommer auf einem unbeschatteten Parkplatz steht, während der Fahrer bei eingeschalteter Klimaanlage 4 schlafen möchte, eine geringe Gebläsestufe des Innenraumventilators 90 eingestellt sein und der Klimakompressors 40 mit hoher Drehzahl betrieben werden, um eine ausreichende Kühlung bereitzustellen. Die beschriebene Regelungsvorrichtung 1 bzw. das erfindungsgemäße Regelungsverfahren stellen einen ausreichend ruhigen Fahrzeuginnenraum 3 zur Verfügung. In diesem Fall kann außerdem eine sensorisch erfasste Sitzposition, insbesondere eine Liegeposition eines Fahrzeugsitzes 8a, 8b, bei der Regelung berücksichtigt werden, um lokal ein noch gezielteres Regelungsergebnis zu erzielen. Die Sitzposition kann beispielsweise durch mindestens eine auf den Fahrzeugsitz 8a, 8b, vorzugsweise die Kopfstütze 9a, 9b, gerichtete Kamera oder Winkelsensoren zur Erfassung der Position der Rückenlehne erfasst werden.

Gemäß dem erfindungsgemäßen Regelungsverfahren kann eine Priorisierung von Regelungszielen vorgenommen werden, die entweder auf den Fahrzeuginnenraum 3 oder die Fahrzeugumgebung 2 abzielen. Beispielsweise wird in einem Szenario der elektrische Akkumulator 60 eines Elektro- oder Hybridfahrzeugs 100 über den Ladeanschluss 61 während einer kurzen Fahrtunterbrechung für die Weiterfahrt an einer Schnellladestation geladen, die sich beispielsweise in der Nähe eines Straßencafes befindet. Aufgrund des hohen Kühlbedarfs des elektrischen Akkumulators 60 und der Leistungselektronik während des Ladevorgangs ist eine hohe Drehzahl des Klimakompressors 40 erforderlich. Insbesondere kann sensorisch die Sitzbelegung des Fahrzeugs 100 erfasst werden. Falls das Fahrzeug leer ist, beispielsweise weil der Fahrer des Fahrzeugs während des Aufladevorgangs in dem Straßencafe wartet, kann ein auf die Fahrzeugumgebung 2 abstellendes Regelungsziel zugunsten eines auf den Fahrzeuginnenraum 3 anstellenden Regelungsziels priorisiert werden. Durch eine sehr weich eingestellte Lagerung 401 des Klimakompressors 40, d.h. eine geringe Federsteifigkeit der semi-aktiven Schwingungsdämpfer 45, können einerseits vibroakustisch ein Brummgeräusch im Fahrzeuginnenraum 3 entstehen und andererseits hochfrequente Schwingungen der Klimaanlage 4 in die Fahrzeugumgebung 2 abgestrahlt werden. Wenn das Fahrzeug leer ist, wird durch die Priorisierung des Regelungsziels durch die Regelungseinheit 10 das Brummgeräusch im Fahrzeuginnenraum 3 akzeptiert, um dafür eine Geräuschreduktion in der Fahrzeugumgebung 2 zu erzielen. Gleichzeitig können in die Fahrzeugumgebung 2 abgestrahlte niederfrequente Schwingungen basierend auf dem vom Außenmikrofon 32 erfassten Außengeräusch über eine abgestimmte Ansteuerung der semi-aktiven Schwingungsdämpfer 45 und/oder der aktiven Pulsationsdämpfer 47a, 47b nachgeregelt werden.

### Bezugszeichenliste:

- 1: Regelungsvorrichtung
- 2: Fahrzeugumgebung
- 3: Fahrzeuginnenraum
- 4: Klimaanlage
- 5: Fahrzeugdatenbus
- 6: fahrzeuginterner Datenspeicher
- 8a: Fahrzeugsitz
- 8b: Fahrzeugsitz
- 9a: Kopfstütze
- 9b: Kopfstütze
- 10: Regelungseinheit
- 20: Beschleunigungssensor
- 21a: erstes Innenmikrofon
- 21b: zweites Innenmikrofon
- 22a: Innenlautsprecher
- 22b: HiFi-Innenlautsprecher
- 30: Beschleunigungssensor
- 31: Beschleunigungssensor
- 32: Außenmikrofon
- 33: Außenlautsprecher
- 34: Shaker
- 35: Shaker
- 36: Shaker
- 40: Klimakompressor
- 41: Verdampfer
- 42: Kondensator
- 43: Lüfter
- 44: Expansionsventil
- 45: Schwingungsdämpfer
- 46: Hilfsrahmen
- 47a: aktiver Pulsationsdämpfer
- 47b: aktiver Pulsationsdämpfer
- 48: Drehzahlsensor
- 401: Lagerung
- 50: Lenkhilfe
- 51: Shaker an Lenksäule
- 52: Beschleunigungssensor
- 53: Lenksäule
- 54: Servopumpe
- 60: elektrischer Akkumulator
- 61: Ladeanschluss
- 70: Reichweitenverlängerer
- 71: Schwingungsdämpfer
- 72: Drehzahlsensor
- 701: Lagerung
- 80: Generator
- 90: Innenraumventilator
- 91: Sende-/Empfangseinheit
- 92: GPS-Empfänger
- 100: Fahrzeug

## Patentansprüche

1. Regelungsvorrichtung (1) zur Lärmminderung für ein Elektrofahrzeug oder Hybridfahrzeug, umfassend:
- mindestens ein gelagertes Nebenaggregat für das Fahrzeug, nämlich eine Klimaanlage (4) mit einem Klimakompressor (40), einen elektrischen Akkumulator (60) oder einen Reichweitenverlängerer (70), wobei das Nebenaggregat im Betrieb Schwingungen emittiert;
- mindestens einen Schwingungssensor (21a, 21b, 32, 20, 30, 31, 52) zur Erfassung von Schwingungen, insbesondere von Schall und/oder Vibrationen ;
- mindestens einen regelbaren Schwingungsaktor (22a, 22b, 33, 34, 35, 36, 51, 47a, 47b) zur Erzeugung von Schwingungen, insbesondere von Schall und/oder Vibrationen, und/oder mindestens einen regelbaren semi-aktiven Schwingungsdämpfer (45, 71) der Lagerung des Nebenaggregats; und
- eine Regelungseinheit (10), die mit dem Schwingungssensor und dem Schwingungsaktor bzw. dem Schwingungsdämpfer verbunden ist, wobei die Regelungseinheit (10) dazu ausgebildet ist, zumindest basierend auf den erfassten Schwingungen, Regelungssignale zur Übertragung an den Schwingungsaktor (22a, 22b, 33, 34, 35, 36, 51, 47a, 47b) bzw. den Schwingungsdämpfer (45, 52, 71, 81) zu erzeugen, die bewirken, dass die von dem Nebenaggregat emittierten Schwingungen in einem Fahrzeuginnenraum (3) und/oder in einer Fahrzeugumgebung (2) abgemindert und/oder maskiert werden.

2. Regelungsvorrichtung gemäß Anspruch 1,
**dadurch gekennzeichnet, dass**
ein Schwingungssensor ein Innenmikrofon (21a, 21b) zur Erfassung von Schall in einem Fahrzeuginnenraum, das insbesondere an einer Kopfstütze (9) eines Fahrzeugsitzes (8) angeordnet ist, oder ein Außenmikrofon (32) zur Erfassung von Umgebungsgeräuschen ist.

3. Regelungsvorrichtung gemäß Anspruch 1 oder 2,
**dadurch gekennzeichnet, dass**
ein Schwingungsaktor ein auf einen Fahrzeuginnenraum gerichteter Innenlautsprecher (22a, 22b) oder ein auf eine Fahrzeugumgebung gerichteter Außenlautsprecher (33) ist, insbesondere zur Emission von Antischall und/oder Maskierungsschall.

4. Regelungsvorrichtung gemäß einem der vorhergehenden Ansprüche,
**dadurch gekennzeichnet, dass**
das Nebenaggregat einen Klimakompressor (40), insbesondere einen Scrollverdichter, oder einen Reichweitenverlängerer (70) umfasst, der einen Drehzahlsensor (48, 72) aufweist,
wobei die Regelungseinheit (10) dazu ausgebildet ist, Regelungssignale basierend auf einer durch den Drehzahlsensor (48, 72) erfassten Drehzahl des Klimakompressors (40) bzw. des Reichweitenverlängerers (70) zu erzeugen, insbesondere um die Federsteifigkeit und/oder Dämpfung des semi-aktiven Schwingungsdämpfers (45, 71), vorzugsweise variabel, einzustellen.

5. Regelungsvorrichtung gemäß einem der vorhergehenden Ansprüche, **dadurch gekennzeichnet, dass**
der semi-aktive Schwingungsdämpfer (45, 71) ein magnetorheologisches oder eine elektrorheologisches Material, insbesondere eine Flüssigkeit, ein Gel, ein Elastomer oder einen Schaum, umfasst.

6. Regelungsvorrichtung gemäß einem der vorhergehenden Ansprüche,
**dadurch gekennzeichnet, dass**
ein Schwingungsaktor ein aktiver Pulsationsdämpfer (47a, 47b) ist, der insbesondere in einer Kühlmittelleitung einer Klimaanlage (4) angeordnet ist.

7. Regelungsvorrichtung gemäß einem der vorhergehenden Ansprüche,
**dadurch gekennzeichnet, dass**
der Schwingungsaktor ein ein- oder mehrachsiger Shaker (34, 35, 36, 51) ist, insbesondere zur Anordnung an einem Dach, einem Bodenblech oder einer Lenksäule (53) des Fahrzeugs.

8. Regelungsvorrichtung gemäß einem der vorhergehenden Ansprüche,
**dadurch gekennzeichnet, dass**
ein Schwingungssensor ein Beschleunigungssensor (20, 30, 31, 52) zur Erfassung von Vibrationen ist, insbesondere zur Anordnung an einer Fahrzeugkarosserie.

9. Regelungsvorrichtung gemäß einem der vorhergehenden Ansprüche,
**dadurch gekennzeichnet, dass**
die Regelungsvorrichtung (1) eine Sende-/Empfangseinheit (91) aufweist, die dazu ausgebildet ist, Lärmemissions- und/oder Lärmimmissionsgrenzwertdaten zu empfangen, wobei die Regelungsvorrichtung (1) vorzugsweise einen GPS-Empfänger (92) aufweist und die Sende-/Empfangseinheit (91) vorzugsweise dazu ausgebildet ist, Lärmemissions- und/oder Lärmimmissionsgrenzwertdaten basierend auf einer von dem GPS-Empfänger (92) empfangenen Position und/oder Zeit zu empfangen.

10. Regelungsvorrichtung gemäß einem der vorhergehenden Ansprüche,
**dadurch gekennzeichnet, dass**
die Regelungsvorrichtung (1) einen computerlesbaren fahrzeuginternen Datenspeicher (6) mit Umgebungsgeräuschdaten des Fahrzeugs und/oder Lärmemissions- und/oder Lärmimmissionsgrenzwertdaten umfasst, die sich insbesondere auf eine Fahrzeugumgebung beziehen.

11. Fahrzeug (100), nämlich Elektrofahrzeug oder Hybridfahrzeug,
**gekennzeichnet durch**
eine Regelungsvorrichtung gemäß einem der Ansprüche 1 bis 10.

12. Regelungsverfahren zur Lärmminderung für ein Elektrofahrzeug oder Hybridfahrzeug, das mittels einer Vorrichtung gemäß einem der Ansprüche 1 bis 10 durchgeführt wird, wobei das Regelungsverfahren die folgenden Schritte umfasst:
- Erfassen von Schwingungen, insbesondere von Schall und/oder Vibrationen, die von einem Nebenaggregat des Fahrzeugs emittiert werden, mittels mindestens eines Schwingungssensors (21a, 21b, 32, 20, 30, 31, 52);
- Erzeugen von Reglungssignalen mittels einer Regelungseinheit (10) zumindest basierend auf den erfassten Schwingungen;
- Übertragen der Reglungssignale an mindestens einen regelbaren Schwingungsaktor (22a, 22b, 33, 34, 35, 36, 51, 47a, 47b) und/oder mindestens einen regelbaren semi-aktiven Schwingungsdämpfer (45, 52, 71, 81) der Lagerung des Nebenaggregats;
- Erzeugen von Schwingungen, insbesondere von Schall und/oder Vibrationen, mittels des Schwingungsaktors (22a, 22b, 33, 34, 35, 36, 51, 47a, 47b) und/oder Dämpfen vom Schwingungen mittels des Schwingungsdämpfers (45, 52, 71, 81), basierend auf den übertragenen Regelungssignalen, um zu bewirken, dass die von dem Nebenaggregat emittierten Schwingungen in einem Fahrzeuginnenraum (3) und/oder in einer Fahrzeugumgebung (2) abgemindert und/oder maskiert werden.

13. Regelungsverfahren gemäß Anspruch 12,
**dadurch gekennzeichnet, dass**
das Regelungsverfahren bei Stillstand eines Elektrofahrzeugs oder Hybridfahrzeugs, bei Betrieb des Nebenaggregats durchgeführt wird, vorzugsweise bei Betrieb einer Klimaanlage oder Standheizung und/oder beim Aufladen des elektrischen Akkumulators (60) des Fahrzeugs, insbesondere während eines Schnellladevorgangs des elektrischen Akkumulators (60).

14. Regelungsverfahren gemäß Anspruch 12 oder 13,
**gekennzeichnet durch**
- Erfassen der, insbesondere variablen, Drehzahl eines von einem Nebenaggregat umfassten Klimakompressors (40), insbesondere eines Scrollverdichters einer Klimaanlage (4), oder Reichweitenverlängerers (70) und
- Erzeugen von Regelungssignalen basierend auf der erfassten Drehzahl, insbesondere zum Einstellen, vorzugsweise variabel, der Federsteifigkeit und/oder Dämpfung des semi-aktiven Schwingungsdämpfers der Lagerung des Nebenaggregats.

15. Regelungsverfahren gemäß einem der Ansprüche 12 bis 14,
**gekennzeichnet durch**
Erfassen eines Umgebungsgeräuschs des Fahrzeugs mittels eines Außenmikrofons (32) und insbesondere Abspeichern der erfassten Umgebungsgeräuschdaten in einem computerlesbaren fahrzeuginternen Datenspeicher (6), vorzugsweise in Form von aufgezeichneten Referenzschallsignalen.

16. Regelungsverfahren gemäß einem der Ansprüche 12 bis 15,
**gekennzeichnet durch**
Empfangen von Lärmemissions- und/oder Lärmimmissionsgrenzwertdaten, beispielsweise von einer Ladestation für ein Elektrofahrzeug oder Hybridfahrzeug oder basierend auf empfangenen GPS-Daten, wobei sich die Lärmemissions- und/oder Lärmimmissionsgrenzwertdaten insbesondere auf eine Fahrzeugumgebung beziehen.

17. Regelungsverfahren gemäß einem der Ansprüche 12 bis 16,
**gekennzeichnet durch**
Einstellen, insbesondere variabel, der Ladeleistung des elektrischen Akkumulators (60) des Fahrzeugs während des Aufladevorgangs, insbesondere basierend auf der zur Kühlung des elektrischen Akkumulators (60) während des Aufladevorgangs erforderlichen Kühlleistung einer Klimaanlage (4), derart, dass Lärmemissions- und/oder Lärmimmissionsgrenzwerte eingehalten werden.

18. Regelungsverfahren gemäß einem der Ansprüche 12 bis 17,
**gekennzeichnet durch**
Emittieren von Schall in die Fahrzeugumgebung mittels mindestens eines Außenlautsprechers (33) zur Maskierung des von einem Nebenaggregat emittierten Schalls, insbesondere basierend auf ausgelesenen Umgebungsgeräuschdaten, insbesondere aufgezeichneten Referenzschallsignalen, vorzugsweise in zeitlich unregelmäßigen Abständen.

19. Regelungsverfahren gemäß einem der Ansprüche 12 bis 18,
**gekennzeichnet durch**
Priorisieren des Erzeugens von Reglungssignalen die sich im Wesentlichen entweder auf einen Fahrzeuginnenraum oder eine Fahrzeugumgebung auswirken, insbesondere basierend auf einer sensorisch erfassten Sitzbelegung des Fahrzeugs und/oder erfasster Umgebungsdaten des Fahrzeugs.

## Claims

1. A control device (1) for noise reduction for an electric vehicle or hybrid vehicle, comprising:
- at least one stored auxiliary unit for the vehicle, namely an air conditioning system (4) with an air conditioning compressor (40), an electric accumulator (60) or a range extender (70),
wherein the auxiliary unit emits vibrations during operation;
- at least one vibration sensor (21a, 21b, 32, 20, 30, 31, 52) for detecting vibrations, in particular sound and/or vibrations;
- at least one controllable vibration actuator (22a, 22b, 33, 34, 35, 36, 51, 47a, 47b) for generating vibrations, in particular sound and/or vibrations, and/or at least one controllable semi-active vibration damper (45, 71) of the mounting of the auxiliary unit; and
- a control unit (10) connected to the vibration sensor and the vibration actuator or the vibration damper,
wherein the control unit (10) is configured to generate, at least on the basis of the detected vibrations, control signals for transmission to the vibration actuator (22a, 22b, 33, 34, 35, 36, 51, 47a, 47b) respectively the vibration damper (45, 52, 71, 81), which have the effect of reducing and/or masking the vibrations emitted by the auxiliary unit in a vehicle interior (3) and/or in a vehicle environment (2).

2. A control device according to claim 1,
**characterised in that**
a vibration sensor is an interior microphone (21a, 21b) for detecting sound in a vehicle interior, which is arranged in particular on a headrest (9) of a vehicle seat (8), or an exterior microphone (32) for detecting ambient noise.

3. A control device according to claim 1 or 2,
**characterized in that**
a vibration actuator is an interior loudspeaker (22a, 22b) directed towards a vehicle interior or an exterior loudspeaker (33) directed towards a vehicle environment, in particular for emitting anti-noise and/or masking noise.

4. A control device according to any one of the preceding claims,
**characterized in that**
the auxiliary unit comprises an air conditioning compressor (40), in particular a scroll compressor, or a range extender (70) comprising a speed sensor (48, 72),
wherein the control unit (10) is configured to generate control signals based on a rotational speed of the air-conditioning compressor (40) or the range extender (70) detected by the rotational speed sensor (48, 72), in particular in order to adjust, preferably variably, the spring stiffness and/or damping of the semi-active vibration damper (45, 71).

5. A control device according to any one of the preceding claims,
**characterised in that**
the semi-active vibration damper (45, 71) comprises a magnetorheological or an electrorheological material, in particular a liquid, a gel, an elastomer or a foam.

6. A control device according to any one of the preceding claims,
**characterised in that**
a vibration actuator is an active pulsation damper (47a, 47b) which is arranged in particular in a coolant line of an air conditioning system (4).

7. A control device according to any one of the preceding claims,
**characterised in that**
the vibration actuator is a single-axis or multi-axis shaker (34, 35, 36, 51), in particular for arrangement on a roof, a floor panel or a steering column (53) of the vehicle.

8. A control device according to any one of the preceding claims,
**characterised in that**
a vibration sensor is an acceleration sensor (20, 30, 31, 52) for detecting vibrations, in particular for arrangement on a vehicle body.

9. A control device according to any one of the preceding claims,
**characterised in that**
the control device (1) comprises a transmitting/receiving unit (91) configured to receive noise emission and/or noise immission limit data, wherein the control device (1) preferably comprises a GPS receiver (92) and the transmitting/receiving unit (91) is preferably configured to receive noise emission and/or noise immission limit data based on a position and/or time received from the GPS receiver (92).

10. A control device according to any one of the preceding claims,
**characterised in that**
the control device (1) comprises a computer-readable in-vehicle data memory (6) with ambient noise data of the vehicle and/or noise emission and/or noise immission limit value data relating in particular to a vehicle environment.

11. Vehicle (100), namely electric vehicle or hybrid vehicle,
**characterised by**
a control device according to any one of claims 1 to 10.

12. A control method for noise reduction for an electric vehicle or hybrid vehicle performed by means of a device according to any one of claims 1 to 10, the control method comprising the following steps:
- Detection of vibrations, in particular sound and/or vibrations emitted by an auxiliary unit of the vehicle, by means of at least one vibration sensor (21a, 21b, 32, 20, 30, 31, 52);
- Generation of control signals by means of a control unit (10) at least based on the detected vibrations;
- Transmitting the control signals to at least one controllable vibration actuator (22a, 22b, 33, 34, 35, 36, 51, 47a, 47b) and/or at least one controllable semi-active vibration damper (45, 52, 71, 81) of the mounting of the auxiliary unit;
- Generating vibrations, in particular sound and/or vibrations, by means of the vibration actuator (22a, 22b, 33, 34, 35, 36, 51, 47a, 47b) and/or damping the vibrations by means of the vibration damper (45, 52, 71, 81), based on the transmitted control signals, in order to cause the vibrations emitted by the auxiliary unit to be reduced and/or masked in a vehicle interior (3) and/or in a vehicle environment (2).

13. A control method according to claim 12,
**characterised in that**
the control method is carried out when an electric vehicle or hybrid vehicle is stationary, during operation of the auxiliary unit, preferably during operation of an air conditioning system or auxiliary heating system and/or during charging of the electric accumulator (60) of the vehicle, in particular during a rapid charging process of the electric accumulator (60).

14. Control method according to claim 12 or 13,
**characterised by**
- Detection of the, in particular variable, rotational speed of an air-conditioning compressor (40), in particular of a scroll compressor of an air-conditioning system (4), or range extender (70), comprised by an auxiliary unit, and
- Generation of control signals based on the detected speed, in particular for adjusting, preferably variably, the spring stiffness and/or damping of the semi-active vibration damper of the bearing of the auxiliary unit.

15. A control method according to any one of claims 12 to 14,
**characterized by**
Detecting an ambient noise of the vehicle by means of an external microphone (32) and, in particular, storing the detected ambient noise data in a computer-readable in-vehicle data memory (6), preferably in the form of recorded reference sound signals.

16. A control method according to any one of claims 12 to 15,
**characterized by**
Receiving noise emission and/or noise immission limit value data, for example from a charging station for an electric vehicle or hybrid vehicle or based on received GPS data, wherein the noise emission and/or noise immission limit value data relate in particular to a vehicle environment.

17. A control method according to any one of claims 12 to 16,
**characterized by**
Adjusting, in particular variably, the charging power of the electric accumulator (60) of the vehicle during the charging process, in particular based on the cooling power of an air conditioning system (4) required for cooling the electric accumulator (60) during the charging process, in such a way that noise emission and/or noise immission limit values are complied with.

18. A control method according to any one of claims 12 to 17,
**characterized by**
Emitting sound into the vehicle environment by means of at least one external loudspeaker (33) for masking the sound emitted by an auxiliary unit, in particular based on read-out ambient noise data, in particular recorded reference sound signals, preferably at irregular time intervals.

19. A control method according to any one of claims 12 to 18,
**characterized by**
Prioritising the generation of control signals that substantially affect either a vehicle interior or a vehicle environment, in particular based on sensed vehicle seat occupancy and/or sensed vehicle environment data.

## Revendications

1. Dispositif de régulation (1) pour la réduction de bruit pour un véhicule électrique ou un véhicule hybride, comprenant :
- au moins une unité auxiliaire montée sur support pour le véhicule, à savoir un système de climatisation (4) avec un compresseur de climatisation (40), un accumulateur électrique (60) ou un prolongateur d'autonomie (70), l'unité auxiliaire émettant des vibrations pendant le fonctionnement ;
- au moins un capteur de vibrations (21a, 21b, 32, 20, 30, 31, 52) destiné à détecter des vibrations, en particulier un son et/ou des vibrations ;
- au moins un actionneur de vibrations réglable (22a, 22b, 33, 34, 35, 36, 51, 47a, 47b) destiné à générer des vibrations, en particulier un son et/ou des vibrations, et/ou au moins un amortisseur de vibrations semi-actif réglable (45, 71) du support de l'unité auxiliaire ; et
- une unité de régulation (10) reliée au capteur de vibrations et à l'actionneur de vibrations et/ou à l'amortisseur de vibrations,
dans lequel l'unité de régulation (10) est conçue pour générer, au moins sur la base des vibrations détectées, des signaux de régulation destinés à être transmis à l'actionneur de vibrations (22a, 22b, 33, 34, 35, 36, 51, 47a, 47b) et/ou à l'amortisseur de vibrations (45, 52, 71, 81), qui font en sorte que les vibrations émises par l'unité auxiliaire dans un habitacle de véhicule (3) et/ou dans un environnement de véhicule (2) soient réduites et/ou masquées.

2. Dispositif de régulation selon la revendication 1,
**caractérisé en ce**
**qu'**un capteur de vibrations est un microphone intérieur (21a, 21b) destiné à détecter un son dans un habitacle de véhicule, qui est disposé en particulier sur un appuie-tête (9) d'un siège de véhicule (8), ou un microphone extérieur (32) destiné à détecter des bruits d'environnement.

3. Dispositif de régulation selon la revendication 1 ou 2,
**caractérisé en ce**
**qu'**un actionneur de vibrations est un haut-parleur intérieur (22a, 22b) dirigé vers un habitacle de véhicule ou un haut-parleur extérieur (33) dirigé vers un environnement de véhicule, en particulier destiné à émettre un antibruit et/ou un bruit de masquage.

4. Dispositif de régulation selon l'une des revendications précédentes,
**caractérisé en ce**
**que** l'unité auxiliaire comprend un compresseur de climatisation (40), en particulier un compresseur à spirale, ou un prolongateur d'autonomie (70), qui présente un capteur de vitesse de rotation (48, 72),
dans lequel l'unité de régulation (10) est conçue pour générer des signaux de régulation sur la base d'une vitesse de rotation, détectée par le capteur de vitesse de rotation (48, 72), du compresseur de climatisation (40) ou du prolongateur d'autonomie (70), en particulier pour régler la raideur de ressort et/ou l'amortissement de l'amortisseur de vibrations semi-actif (45, 71), de préférence de manière variable.

5. Dispositif de régulation selon l'une des revendications précédentes,
**caractérisé en ce**
**que** l'amortisseur de vibrations semi-actif (45, 71) comprend un matériau magnétorhéologique ou électrorhéologique, en particulier un liquide, un gel, un élastomère ou une mousse.

6. Dispositif de régulation selon l'une des revendications précédentes,
**caractérisé en ce**
**qu'**un actionneur de vibrations est un amortisseur de pulsations actif (47a, 47b) qui est disposé en particulier dans une conduite de liquide de refroidissement d'un système de climatisation (4).

7. Dispositif de régulation selon l'une des revendications précédentes,
**caractérisé en ce**
**que** l'actionneur de vibrations est un vibreur à un ou plusieurs axes (34, 35, 36, 51), en particulier destiné à être disposé sur un toit, un panneau de plancher ou une colonne de direction (53) du véhicule.

8. Dispositif de régulation selon l'une des revendications précédentes,
**caractérisé en ce**
**qu'**un capteur de vibrations est un capteur d'accélération (20, 30, 31, 52) destiné à détecter des vibrations, en particulier destiné à être disposé sur une carrosserie de véhicule.

9. Dispositif de régulation selon l'une des revendications précédentes,
**caractérisé en ce**
**que** le dispositif de régulation (1) présente une unité d'émission/réception (91) conçue pour recevoir des données de valeurs limites d'émission de bruit et/ou d'immission de bruit, dans lequel le dispositif de régulation (1) présente de préférence un récepteur GPS (92) et l'unité d'émission/réception (91) est de préférence conçue pour recevoir des données de valeurs limites d'émission de bruit et/ou d'immission de bruit sur la base d'une position et/ou d'un temps reçus par le récepteur GPS (92).

10. Dispositif de régulation selon l'une des revendications précédentes,
**caractérisé en ce**
**que** le dispositif de régulation (1) comprend une mémoire de données interne au véhicule lisible par ordinateur (6) contenant des données de bruit d'environnement du véhicule et/ou des données de valeurs limites d'émission de bruit et/ou d'immission de bruit qui sont relatives en particulier à un environnement de véhicule.

11. Véhicule (100), notamment véhicule électrique ou véhicule hybride,
**caractérisé par**
un dispositif de régulation selon l'une des revendications 1 à 10.

12. Procédé de régulation pour la réduction de bruit pour un véhicule électrique ou un véhicule hybride, mis en œuvre au moyen d'un dispositif selon l'une des revendications 1 à 10, le procédé de régulation comprenant les étapes consistant à
- détecter des vibrations, en particulier un son et/ou des vibrations qui sont émis par une unité auxiliaire du véhicule, au moyen d'au moins un capteur de vibrations (21a, 21b, 32, 20, 30, 31, 52) ;
- générer des signaux de régulation au moyen d'une unité de régulation (10) au moins sur la base des vibrations détectées ;
- transmettre les signaux de régulation à au moins un actionneur de vibrations réglable (22a, 22b, 33, 34, 35, 36, 51, 47a, 47b) et/ou au moins un amortisseur de vibrations semi-actif réglable (45, 52, 71, 81) du support de l'unité auxiliaire ;
- générer des vibrations, en particulier un son et/ou des vibrations, au moyen de l'actionneur de vibrations (22a, 22b, 33, 34, 35, 36, 51, 47a, 47b) et/ou amortir des vibrations au moyen de l'amortisseur de vibrations (45, 52, 71, 81), sur la base des signaux de régulation transmis, pour faire en sorte que les vibrations émises par l'unité auxiliaire dans un habitacle de véhicule (3) et/ou dans un environnement de véhicule (2) soient réduites et/ou masquées.

13. Procédé de régulation selon la revendication 12,
**caractérisé en ce**
**que** le procédé de régulation est mis en œuvre lorsque le véhicule électrique ou le véhicule hybride est à l'arrêt, avec l'unité auxiliaire en fonctionnement, de préférence avec un système de climatisation ou de chauffage auxiliaire en fonctionnement et/ou avec l'accumulateur électrique (60) du véhicule en charge, en particulier pendant un processus de charge rapide de l'accumulateur électrique (60).

14. Procédé de régulation selon la revendication 12 ou 13,
**caractérisé par** les étapes consistant à
- détecter la vitesse de rotation, en particulier variable, d'un compresseur de climatisation (40), en particulier d'un compresseur à spirale d'un système de climatisation (4), ou d'un prolongateur d'autonomie (70) compris dans une unité auxiliaire et
- générer des signaux de régulation sur la base de la vitesse de rotation détectée, en particulier pour régler, de préférence de manière variable, la raideur de ressort et/ou l'amortissement de l'amortisseur de vibrations semi-actif du support de l'unité auxiliaire.

15. Procédé de régulation selon l'une des revendications 12 à 14,
**caractérisé par** l'étape consistant à
détecter un bruit d'environnement du véhicule au moyen d'un microphone extérieur (32) et en particulier stocker des données de bruit d'environnement détectées dans une mémoire de données interne au véhicule lisible par ordinateur (6), de préférence sous la forme de signaux sonores de référence enregistrés.

16. Procédé de régulation selon l'une des revendications 12 à 15,
**caractérisé par** l'étape consistant à
recevoir des données de valeurs limites d'émission de bruit et/ou d'immission de bruit, par exemple d'une station de charge pour un véhicule électrique ou un véhicule hybride ou sur la base de données GPS reçues, dans lequel les données de valeurs limites d'émission de bruit et/ou d'immission de bruit sont relatives en particulier à un environnement de véhicule.

17. Procédé de régulation selon l'une des revendications 12 à 16,
**caractérisé par** l'étape consistant à
régler, en particulier de manière variable, la puissance de charge de l'accumulateur électrique (60) du véhicule pendant le processus de charge, en particulier sur la base de la puissance de refroidissement d'un système de climatisation (4) nécessaire pour refroidir l'accumulateur électrique (60) pendant le processus de charge, de telle sorte que des valeurs limites d'émission de bruit et/ou d'immission de bruit soient respectées.

18. Procédé de régulation selon l'une des revendications 12 à 17,
**caractérisé par** l'étape consistant à
émettre un son dans l'environnement de véhicule au moyen d'au moins un haut-parleur extérieur (33) pour masquer le son émis par une unité auxiliaire, en particulier sur la base de données de bruit d'environnement lues, en particulier de signaux sonores de référence enregistrés, de préférence à des intervalles de temps irréguliers.

19. Procédé de régulation selon l'une des revendications 12 à 18,
**caractérisé par** l'étape consistant à
prioriser la génération de signaux de régulation qui ont un effet essentiellement sur un habitacle de véhicule ou un environnement de véhicule, en particulier sur la base d'une occupation de sièges du véhicule détectée par des capteurs et/ou de données d'environnement détectées du véhicule.
